# NEUE EUROPÄISCHE PATENTSCHRIFT

(11) **EP 1 014 004 B2**
(45) Veröffentlichungstag und Bekanntmachung des Hinweises auf die Entscheidung über den Einspruch: **04.03.2009**
(45) Hinweis auf die Patenterteilung: 05.11.2003
(21) Anmeldenummer: 99125124.0
(22) Anmeldetag: 16.12.1999
(51) Int. Cl.: A47B 88/14, F24C 15/16, F16C 29/04, F16C 33/42

(54) **Teleskopauszugsvorrichtung für Haushaltsgeräte und Möbel**
Telescopic withdrawal device for household appliances and furniture
Dispositif de coulissement télescopique pour des appareils ménager ou des meubles

(30) Priorität: 23.12.1998 DE 19859986
(43) Veröffentlichungstag der Anmeldung: 28.06.2000
(73) Patentinhaber: BSH Bosch und Siemens Hausgeräte GmbH, 81739 München (DE)
(72) Erfinder: Reiff, Udo, 75438 Knittlingen (DE)

(56) Entgegenhaltungen:
- EP-A- 0 626 143
- DE-A- 3 924 101
- DE-U- 8 312 984
- DE-U- 8 915 819
- GB-A- 2 079 145

## Beschreibung

Die Erfindung betrifft eine Teleskopauszugsvorrichtung für Haushaltgeräte und Möbel gemäß dem Anspruch 1.

Insbesondere betrifft die Erfindung Teleskopauszugsvorrichtungen in Küchenmöbeln, und dort insbesondere in der Backofenmuffel eines Backofens.

Eine Teleskopauszugsvorrichtung dieser Art ist aus der DE-C 36 28 763 bekannt. Dort handelt es sich um einen sogenannten Quattroauszug in einer Backofenmuffel, weil zwischen einer ortsfest angeordneten inneren Schiene und einer sie umgreifenden, relativ zu ihren Längsrichtungen verschiebbaren äußeren Schiene Lager-Kugeln angeordnet sind, welche in vier um 90° versetzt voneinander angeordneten Längsnuten der Innenschiene angeordnet sind. Zwischen der inneren Schiene und der äußeren Schiene befindet sich ein Käfig mit Öffnungen für je eine der Lager-Kugeln. Die Lager-Kugeln ragen zur inneren Schiene und zur äußeren Schiene hin über den Käfig hinaus und stützen die beiden Schienen aufeinander ab. Die innere Schiene hat einen durch einen Längsschlitz der äußeren Schiene hindurchragenden Steg, welcher auf verschiedenen Höhen an ortsfesten Tragschienen einhängbar ist, welche auf der Innenseite von Seitenwänden der Backofenmuffel befestigt sind.

Die Lager-Kugeln sollen zwischen den beiden Schienen und in dem Käfig rollen können, ohne daß sie klemmen oder quietschen. Bei Möbeln und bei Haushaltsgeräten, insbesondere Küchengeräten, bei welchen keine hohenTemperaturen auftreten, können die Teleskopauszugsvorrichtungen, insbesondere die Kugeln, mit einem Schmiermittel, z.B. Fett, geschmiert werden. Femer kann als Käfig-Material Kunststoff mit guten Gleiteigenschaften anstelle von Stahl verwendet werden. Die beiden Möglichkeiten "Schmiermittel und/oder Kunststoff als Käfig-Material" können jedoch in Backofenmuffeln nicht verwendet werden, weil in einer Backofenmuffel Temperaturen bis z.B. 400°C auftreten können. Bei so hohen Temperaturen würde das Schmiermittel abtropfen oder der Kunststoff des Käfigs schmelzen. Deshalb ist es, als dritte Möglichkeit, bekannt, den Käfig von Teleskopauszugsvorrichtungen, die in einer Backofenmuffel verwendet werden, aus einem hochtemperaturbeständigen und gleichzeitig gute Gleiteigenschaften aufweisendem Material herzustellen, welches eine Kunststoff-Kohlenstoff-Mischung ist. Die Herstellung solcher Materialmischungen und daraus gebildeter Käfige für Wälzlagerelemente, wie beispielsweise Lager-Kugeln, ist sehr teuer.

In einer Backofenmuffel ist auf jeder der beiden Seitenwände mindestens eine Teleskopauszugsvorrichtung angeordnet. Auf die beweglichen Schienen der beiden Teleskopauszugsvorrichtungen kann ein Backblech, ein Gitter oder eine andere Back- oder Grillvorrichtung gesetzt werden und zusammen mit den beweglichen Schienen in die Backofenmuffel eingeschoben oder aus dieser herausgezogen werden. Bei anderen Haushaltgeräten, insbesondere Küchengeräten, und bei Möbeln können die beweglichen Schienen an Schubladen oder Geräteplatten befestigt sein. Zwischen der beweglichen Schiene und der ortsfesten Schiene oder an anderen Geräteteilen sind vorzugsweise Anschläge vorgesehen, welche die Strecke begrenzen, um welche die bewegliche Schiene relativ zur ortsfesten Schiene in Schienenlängsrichtung bewegbar ist. Ferner können, wie aus dem Stand der Technik ebenfalls bekannt, Auflaufflächen vorgesehen sein, welche in bestimmten Längsabschnitten der Schienen einen definierten Bremswiderstand auf die bewegliche Schiene ausüben. Ferner ist aus der Druckschrift DE 80 25 661 U1 ein Käfigkörper bekannt, der kugelmuldenartige Durchtiefungen aufweist, die eine Kugelrast bilden. Zudem weist der Käfigkörper auf den Durchtiefungen gegenüberliegenden Seiten Lippen auf.

Durch die Erfindung soll die Aufgabe gelöst werden, die Teleskopauszugsvorrichtung derart auszubilden, daß sie ohne Schmiermittel und ohne die Verwendung von teuren Materialien oder teuren Herstellungsverfahren gute Laufeigenschaften aufweist, insbesondere auch dann, wenn sie thermisch hoch belastet wird, beispielsweise Temperaturen von mehreren hundert Grad Celsius ausgesetzt ist.

Diese Aufgabe wird gemäß der Erfindung durch die Merkmale von Anspruch 1 gelöst.

Durch die Erfindung kann der Käfig von Teleskopauszugsvorrichtungen auch dann aus einem normalen Stahlblech bestehen, wenn die Teleskopauszugsvorrichtung bei der Verwendung hohen Temperaturen ausgesetzt ist, beispielsweise in einer Backofenmuffel eines Backofens Temperaturen von mehreren hundert Grad Celsius, beispielsweise 400°C.

Durch die Erfindung ist weder ein Schmiermittel für die Wälzlagerelemente noch ein besonderes Material für den Käfig erforderlich. Auch ist es nicht erforderlich, die Öffnungsränder der Käfigöffnungen, in welchen je ein Wälzlagerelement angeordnet ist, abzurunden. Durch die Bildung der vorderen und hinteren Öffnungswandteile durch lappen-förmige, vom Käfig aus der Käfigebene heraus abgebogene Vorsprünge ergeben sich großflächige Öffnungsränder, an welchen die Wälzlagerelemente leicht entlanggleiten können, ohne zu klemmen oder zu quietschen.

Die Wälzlagerelemente sind vorzugsweise Lager-Kugeln, können jedoch auch andere bekannte Wälzlagerelemente sein, beispielsweise zylindrische oder tonnenförmige Rollen.

Die Erfindung wird im folgenden mit Bezug auf die Zeichnungen anhand einer bevorzugten Ausführungsform als Beispiel beschrieben.

In den Zeichnungen zeigen:
- Fig. 1: schematisch einen Elektroherd mit einer Backofenmuffel und in dieser angeordnete Teleskopauszugsvorrichtungen nach der Erfindung,
- Fig. 2: eine Schnittansicht von einer Teleskopauszugsvorrichtung längs der Ebene II-II von Fig. 3,
- Fig. 3: eine abgebrochene Draufsicht in Richtung des Pfeiles III auf die Teleskopauszugsvorrichtung von Fig. 2, wobei eine äußere Schiene im Querschnitt gezeichnet ist.

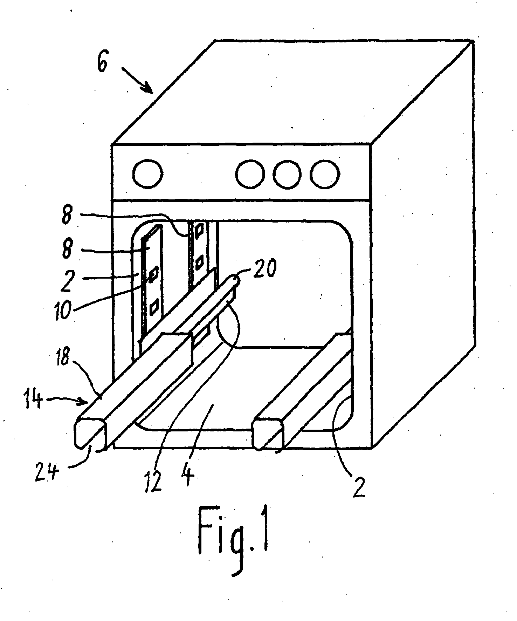

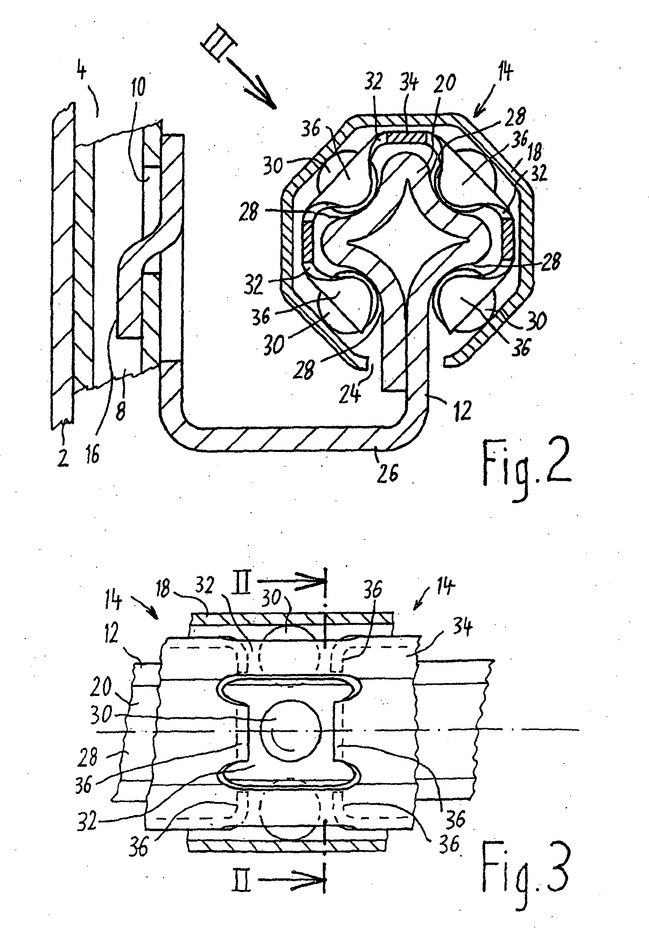

Auf den Innenseiten der Seitenwände 2 der Backofenmuffel 4 eines in Fig. 1 dargestellten Elektroherdes 6 (oder Gasherdes) sind je zwei Tragschienen 8 mit Abstand hintereinander vertikal angeordnet. Die Tragschienen 8 sind mit einer Vielzahl von übereinander angeordneten Aussparungen 10 versehen, in welche wahlweise auf verschiedenen Höhen die ortsfeste Schiene 12 einer Teleskopauszugsvorrichtung 14 über Hakenvorsprünge 16 gemäß Fig. 2 einhängbar ist. Jede Teleskopauszugsvorrichtung 14 hat eine bewegliche Schiene 18, welche von der ortsfesten Schiene 12 getragen wird und relativ zur dieser in Schienenlängsrichtung beweglich angeordnet ist. Die axiale Bewegungsstrecke der beweglichen Schiene 18 ist durch nicht dargestellte Anschlagelemente begrenzt und kann durch ebenfalls nicht dargestellte Bremsflächen auf bestimmten Streckenabschnitten einen größerem Bewegungswiderstand haben als auf anderen Streckenabschnitten. Auf die beweglichen Schienen 18 der beiden Teleskopauszugsvorrichtungen 14, welche auf gleicher Höhe an den beiden Seitenwänden 2 angeordnet sind, können Gargutträger, beispielsweise ein Backblech oder ein Grillrost, gelegt werden und zusammen mit den beweglichen Schienen 18 in die Backofenmuffel 4 eingeschoben oder aus ihr herausgezogen werden.

Bei jeder Teleskopauszugsvorrichtung 14 umgreift die bewegliche Schiene 18 einen Führungskopf 20 der ortsfesten Schiene 12. Gemäß einer anderen, nicht dargestellten Ausführungsform könnte dies umgekehrt ausgeführt werden, so daß die ortsfeste Schiene die bewegliche Schiene in Schienenumfangsrichtung umgreift.

Die einander parallel gegenüberliegenden Längsränder der beweglichen Schiene 18 bilden zwischen sich einen Längsschlitz 24, durch welchen sich ein Steg 26 der ortsfesten Schiene 12 von dem Führungskopf 20 bis zu den Hakenvorsprüngen 16 erstreckt. Der Führungskopf 20, der Steg 26 und die Hakenvorsprünge 16 der ortsfesten Schiene 12 bestehen insgesamt aus einem einstückigen Teil aus Stahl. Die bewegliche Schiene 18 besteht ebenfalls aus Stahl.

Im Führungskopf 20 sind im Umfangsabstand von ungefähr 90°, und damit auf vier Quadranten verteilt, vier Längsnuten 28 geformt.

Lager-Kugeln 30 sind entsprechend den Fig. 2 und 3 je in einer Öffnung 32 eines Käfigs 34 angeordnet. Der Käfig 34 besteht aus Stahlblech. Die vorzugsweise ebenfalls aus Stahl bestehenden Kugeln 30 haben einen Durchmesser, welcher größer ist als die Dicke des Käfigs 34, so daß sie quer zum Käfig beidseitig aus den Öffnungen 32 herausragen und sich einerseits in den Längsnuten 28 der inneren ortsfesten Schiene 12 und andererseits an dem Innenumfang der äußeren beweglichen Schiene 18 abstützen.

Die Öffnungen 32 können rechteckig, rund oder eine andere Form haben. Bei der dargestellten Ausführungsform sind sie ungefähr rechteckig. Die in Schienenlängsrichtung vorderen und hinteren Öffnungswandteile 36 der Öffnungen 32 sind durch Käfigvorsprünge gebildet, welche von dem Käfig 34 in Richtung von der äußeren beweglichen Schiene 18 zur inneren ortsfesten Schiene 12 hin abgebogen sind und in die Längsnuten 28 hineinragen. Die von dem Käfig 34 nach innen abgebogenen Öffnungswandteile 36 bilden am vorderen und hinteren Öffnungsende glatte Auflaufflächen für die Kugeln 30, an welchen die Kugeln 30 mit geringem Reibungswiderstand gleiten können. Die vom Käfig 34 abgebogenen Öffnungswandteile 36 haben an ihren freien Endabschnitten vorzugsweise eine der Querschnittsform der Längsnuten 28 angenäherte Kontur.

Die von dem Käfig 34 abgebogenen Öffnungswandteile 36 erstrecken sich vorzugsweise rechtwinklig zur Schienenlängsrichtung oder in jeder Öffnung 32 leicht schräg aufeinander zu. Der Käfig 34 kann durch einen einfachen Stanz- und Prägevorgang aus einem Stahlblech hergestellt werden. Wenn die Vorsprünge, welche die vorderen und hinteren Öffnungswandteile 36 bilden, sich in Schienenlängsrichtung voneinander wegerstrecken, so daß ihre freien Enden voneinander weg zeigen, dann ist ihre Herstellung schwieriger.

## Patentansprüche

1. Teleskopauszugsvorrichtung für Haushaltgeräte und Möbel, mit mindestens zwei Schienen (12,18), die durch drehbare Wälzlagerelemente (30) aneinander gelagert sind und in Schienenlängsrichtung relativ zueinander bewegbar sind, und mit mindestens einem zwischen den Schienen angeordneten Käfig (34), der Öffnungen (32) aufweist, in welchen die Wälzlagerelemente (30) angeordnet sind, wobei die Wälzlagerelemente in Richtung zu den Schienen hin aus den Öffnungen herausragen, wobei mindestens die in Schienenlängsrichtung vorderen und hinteren Öffnungswandteile durch Käfigvorsprünge (36) mit Auflaufflächen gebildet sind, welche von dem Käfig (34) quer zur Schienenlängsrichtung abgebogen sind und wobei mindestens eine der Schienen (12) mindestens eine Längsnut (28) aufweist, in welcher die Wälzlagerelemente (32) in Schienenlängsrichtung geführt sind, und daß die Käfigvorsprünge (36) von dem Käfig (34) in die Längsnut (28) hineinragen, wobei die andere Schiene (18) die eine Schiene (12) mindestens im Bereich (20) eine der Längsnuten (28) umgreift, und wobei die eine Schiene 12 vier Längsnuten (28) aufweist, die in Schienenumfangsrichtung auf mehr als 180° verteilt angeordnet sind, wobei in allen Längsnuten (28) Wälzlagerelemente (30) angeordnet sind, die in Öffnungen (32) des Käfigs (34) angeordnet sind, deren vorderen und hinteren Öffnungswandteile durch die vom Käfig (34) abgebogenen Käfigvorsprünge (36) gebildet sind, und wobei der Käfig (34) durch einen einfachen Stanz- und Prägevorgang aus einem Stahlblech hergestellt wird.

2. Teleskopauszugsvorrichtung nach Anspruch 1, **dadurch gekennzeichnet, daß** die Käfigvorsprünge (36) eine der Querschnittsform der Längsnut (28), in welche sie hineinragen, angenäherte Kontur haben.

3. Teleskopauszugsvorrichtung nach einem der vorhergehenden Ansprüche, **dadurch gekennzeichnet, daß** die Wälzlagerelemente Kugeln (30) sind.

4. Teleskopauszugsvorrichtung nach einem der vorhergehenden Ansprüche, **dadurch gekennzeichnet, daß** der Käfig (34) aus Stahl besteht.

5. Teleskopauszugsvorrichtung nach einem der vorhergehenden Ansprüche, **dadurch gekennzeichenet, daß** die eine Schiene (12) ortsfest angeordnet und die andere Schiene (18) relativ zu ihr in Schienenlängsrichtung verschiebbar ist.

6. Verwendung von mindestens einer Teleskopauszugsvorrichtung nach mindestens einem der vorhergehenden Ansprüche in einem Küchengerät (6).

7. Verwendung von mindestens einer Telekopauszugsvorrichtung nach mindestens einem der Ansprüche 1 bis 5 in einer Backofenmuffel (4).

## Claims

1. Telescopic extension device for domestic appliances and furniture, comprising at least two rails (12, 18), which are mounted on one another by rotatable rollable bearing elements (30) and are movable relative to one another in rail longitudinal direction, and at least one cage (34), which is arranged between the rails and which has openings (32) in which the rollable bearing elements (30) are arranged, wherein the rollable bearing elements project out of the openings in direction towards the rails, wherein at least the opening wall parts forward and rearward in rail longitudinal direction are formed by cage projections (36) with run-up surfaces, which are bent over from the cage (34) transversely to the rail longitudinal direction, and wherein at least one of the rails (12) has at least one longitudinal groove (28) in which the rollable bearing elements (32) are guided in rail longitudinal direction and the cage projections (36) project from the cage (34) into the longitudinal groove (28), wherein the other rail (18) engages around the one rail (12) at least in the region (20) of one of the longitudinal grooves (28), and wherein the one rail (12) has four longitudinal grooves (28) which are arranged to be distributed in rail circumferential direction on more than 180°, wherein rollable bearing elements (30), which are arranged in openings (32) of the cage (34), are arranged in all longitudinal grooves (28), the forward and rearward opening wall parts being formed by the cage projections (36) bent over from the cage (34), and wherein the cage (34) is produced from sheet steel by a simple punching and stamping process.

2. Telescopic extension device according to claim 2, **characterised in that** the cage projections (36) have a contour approximating the cross-sectional shape of the longitudinal groove (28) into which they protrude.

3. Telescopic extension device according to one of the preceding claims, **characterised in that** the rollable bearing elements are balls (30).

4. Telescopic extension device according to one of the preceding claims, **characterised in that** the cage (34) consists of steel.

5. Telescopic extension device according to one of the preceding claims, **characterised in that** the one rail (12) is arranged to be stationary and the other rail (18) is displaceable relative thereto in rail longitudinal direction.

6. Use of at least one telescopic extension device according to at least one of the preceding claims in a kitchen appliance (6).

7. Use of at least one telescopic extension device according to at least one of claims 1 to 5 in a baking oven muffle (4).

## Revendications

1. Dispositif d'extraction télescopique pour appareils ménagers et meubles, avec au moins deux rails (12, 18) qui sont montés l'un sur l'autre par des éléments de palier à roulement (30) et qui peuvent être déplacés l'un par rapport à l'autre dans le sens de la longueur des rails, et avec au moins une cage (34) disposée entre les rails et qui présente des ouvertures (32) dans lesquelles sont disposés les éléments de palier à roulement (30), les éléments de palier à roulement débordant des ouvertures en direction des rails, au moins les parties de paroi d'ouverture avant et arrière dans le sens de la longueur du rail étant formées par des saillies de la cage (36) avec des surfaces de butée qui sont rabattues par rapport à la cage (34), transversalement au sens de la longueur des rails, au moins l'un des rails (12) présentant au moins une rainure longitudinale (28) dans laquelle les éléments de palier à roulement (30) sont guidés, les saillies (36) de la cage débordant de la cage (34) dans la rainure longitudinale (28), l'autre rail (18) chevauchant le premier rail (12) au moins dans la région (20) de l'une des rainures longitudinales (28), le premier rail (12) présentant quatre rainures longitudinales (28) qui sont réparties dans le sens périphérique du rail sur plus de 180°, les éléments de palier à roulement (30) qui étant disposés dans toutes les rainures longitudinales (28), lesquels éléments de palier à roulement (30) sont disposés dans des ouvertures (32) de la cage (34) dans les parties de paroi d'ouverture avant et arrière sont formées par les saillies (36) de la cage rabattues par rapport à la cage (34) et la cage (34) étant fabriquée par une simple opération d'estampage et d'emboutissage d'une tôle en acier.

2. Dispositif d'extraction télescopique selon la revendication 1, **caractérisé en ce que** les saillies (36) de la cage ont un contour proche de la forme de la section transversale de la rainure longitudinale (28) dans laquelle elles débordent.

3. Dispositif d'extraction télescopique selon l'une des revendications précédentes, **caractérisé en ce que** les éléments de palier à roulement sont des billes (30).

4. Dispositif d'extraction télescopique selon l'une des revendications précédentes, **caractérisé en ce que** la cage (34) est formée d'acier.

5. Dispositif d'extraction télescopique selon l'une des revendications précédentes, **caractérisé en ce que** le premier rail (12) est disposé en position fixe et l'autre rail (18) peut coulisser par rapport à lui dans le sens de la longueur des rails.

6. Utilisation d'au moins un dispositif d'extraction télescopique selon au moins l'une des revendications précédentes dans un appareil de cuisine (6).

7. Utilisation d'au moins un dispositif d'extraction télescopique selon au moins l'une des revendications 1 à 5 dans le moufle (4) d'un four de cuisson.
